# EUROPEAN PATENT APPLICATION

(11) **EP 3 512 159 A1**
(43) Date of publication of application: **17.07.2019**
(21) Application number: 18398001.0
(22) Date of filing: 16.01.2018
(51) Int. Cl.: H04L 9/32, G06F 21/64, G06F 11/18

(54) **METHOD, PLATFORM AND SYSTEM FOR ENSURING AUDITABILITY OF AN IMMUTABLE DIGITAL TRANSACTION**

(71) Applicant: Scyphir, Unipessoal LDA, 1050-184 Lisboa (PT)
(72) Inventor: Gil de Almeida, Mauricio, 1050-184 Lisboa (PT); Aaraj, Najwa, 1050-184 Lisboa (PT)
(74) Representative: do Nascimento Gomes, Rui

(57) **Abstract**

The present invention is in the area of auditability protocols for secure communication transactions, applying a Blockchain based methodology. It includes a method for ensuring auditability of a digital transaction comprising the receipt of a set of hashes corresponding to the hashing of an encrypted digital transaction sent from a sender device (2) to a recipient in a first trusted validating peer system (5), the broadcasting of such hashes to a plurality of trusted validating peer systems (5), the consensus between trusted validating peer systems (5) on an agreed order and appending of said set of hashes in said order to a block in each trusted validating peer systems (5), thereby forming a digital ledger in each of said trusted validating peer systems (5) and a corresponding state table. It also comprises a platform which implements such method and a distributed system (1) comprising such platform. The present invention therefore enables private/confidential auditing of digital transactions between two devices.

## Description

### FIELD OF THE INVENTION

The present invention is enclosed in the area of auditability protocols for secure communication transactions over a network, in particular over the Internet.

### PRIOR ART

Solutions exist in the art where details on a communication between two devices through a network is registered (secured or not) in a single third party, trusted by both the sender and the recipient.

However, since such solution is centralized, it leads to a need of high complexity of such third party, as well as a high complexity of the protocols used for maintaining and securing such details and for communicating with such third party.

Further, such solutions have the issue of an easiness in attacking it, in particular through corruption of stored data, as the information is stored in a single place.

Recently, distributed technologies have been developed, specifically for digital economic values transfer, as is the case of Blockchain technologies and distributed ledgers architecture.

However, such solution does not simultaneously provide for privacy of the user and secure auditability, being only focused on the first.

The present solution innovatively overcomes such issues, providing private/confidential auditing of digital transactions between two devices, which at the same time is robust against attacks.

### SUMMARY OF THE INVENTION

It is therefore an object of the present invention a method for ensuring auditability of a digital transaction, the method comprising the following steps:
a) on receipt of a set of hashes corresponding to the hashing of an encrypted digital transaction sent from a sender device (2) to a recipient device in a first trusted validating peer system (5) from a plurality of trusted validating peer systems, dissemination of such set of hashes from said first trusted validating peer system (5) to the remaining trusted validating peer systems (5);
b) consensus by the plurality of trusted validating peer systems (5) on an agreed order associated with said set of hashes;
c) appending of said set of hashes in said agreed order to a block in each of said trusted validating peer systems (5), thereby forming a digital ledger in each of said trusted validating peer systems (5) and a corresponding state table,
said trusted validating peer systems (5) being connected between each other by a minimum number of connections per trusted validating peer system (5), such number being greater than 1.

Such method therefore provides for auditability of any digital transaction by maintaining what may be considered a distributed database in the plurality of trusted validating peer systems (5). At the same time it provides reliable and robust data associated with a digital transaction on such distributed database - the digital ledger which comprises the hashes -, such data is in the form of such hashes, thereby providing transactions integrity proofs and non-reversibility. The method of the present invention therefore enables private/confidential auditing of digital transactions between two devices. Simultaneously, such mechanism is robust, in particular due to its distributed character. Preferably, said digital transaction comprises chat, voice, email, file and/or video data. Dissemination may be performed through broadcasting from the first trusted validating peer to the remaining. Said state table contains the internal state of the chain. A digital transaction is sent in parallel through adequate end-to-end encryption protocol(s), to a corresponding receiving device (3).

In an inventive aspect of the method of the present invention, said set of hashes is maintained in the referred blocks of each of the trusted validating peer systems (5) through a Merkle Tree structure, each of the trusted validating peer systems (5) maintaining an internal state of such Merkle Tree. This additional step further enhances the feature that transactions between devices are audited while content is still encrypted.

In another advantageous configuration of the method of the present invention, each hashing further comprises:
- a public key of a key pair associated with the sender device (2) and
- the digital transaction being signed with the private key of said key pair.
Such embodiment therefore provides that an attempted modification of one hash entails the necessity of compromising the signing with a private key, thereby further ensuring immutability of data.

In a further aspect of such method, said hashing consists of a Secure Hash Algorithm (SHA), preferably agile functions such as Secure Hash Algorithm 3 (SHA-3). Hence, the block - which forms the digital ledger - is further protected through hash function agility of SHA-3, enabling to compute parallel hashes (a same hash as maintained in the several trusted validating peer systems (5)) of a digital transaction.

In yet another inventive aspect of the method of the present invention, each hashing further comprises:
- an identifier of the sender device (2) and/or an identifier of a user associated with the sender device (2),
- an identifier of the recipient device and, preferably,
- a nonce associated with the encrypted digital transaction.

Such embodiment enables that only a user with a specific identifier of the sender device (2) and/or an identifier of a user associated with the sender device (2) may be traced back to a digital transaction. It is particularly suitable for cases in which the user owns multiple platforms to be synchronized. Further, the specification of an identifier of the sender device (2) and of an identifier of a user associated with the sender device (2) provides that such tracing may be detailed on a specific device associated with a user or, on a larger scope, of a set of devices associated with a user (case of identifier of a user associated with sender devices (2)). The use of the nonce is especially helpful in for protection against replay attacks.

In a related inventive aspect, said appending of the set of hashes to a block in each of said trusted validating peer devices further comprises the appending of:
- an identifier of the sender device (2) and/or an identifier of a user associated with the sender device,
- an identifier of the recipient device and, preferably,
- a nonce associated with the encrypted digital transaction and/or
- the time of the digital transaction,
thereby maintaining such data in the block. As for the above case, the use of the nonce is particularly helpful in for protection against replay attacks.

In another advantageous embodiment of the method of the present invention, each hashing further comprises a classification parameter, such classification parameter being associated with a security level and / or protocol of said encrypted digital transaction. It therefore enables the creation of a risk profile while preserving users' privacy. For example, given a set of hashes, such embodiment further provides the identification of frequent communication of information in a specific classification parameter, in particular identifying i) a lower security pattern, which potentially leads to sending information over inadequate security protocols or ii) a frequent communication of information over highest-classification protocols, which thus potentially leads to unnecessary depletion of computing resources.

In yet another innovative aspect of the method of the present invention, each trusted validating peer system (5) of the plurality of trusted validating peer systems (5) consists of an individual system having a unique identifier. Thus, systems which are responsible for maintaining the referred ledger are individually identifiable entities, thereby ensuring Accountability (i.e., such entities may be held responsible to their activities).

It is also an object of the present invention a platform for ensuring auditability of a digital transaction which comprises a plurality of trusted validating peer systems (5) configured to implement the method of the present invention as above described.

It is also an object of the present invention a distributed system (1) for ensuring auditability of a digital transaction comprising the referred platform and, preferably, a trusted central server (4).

### DESCRIPTION OF FIGURES

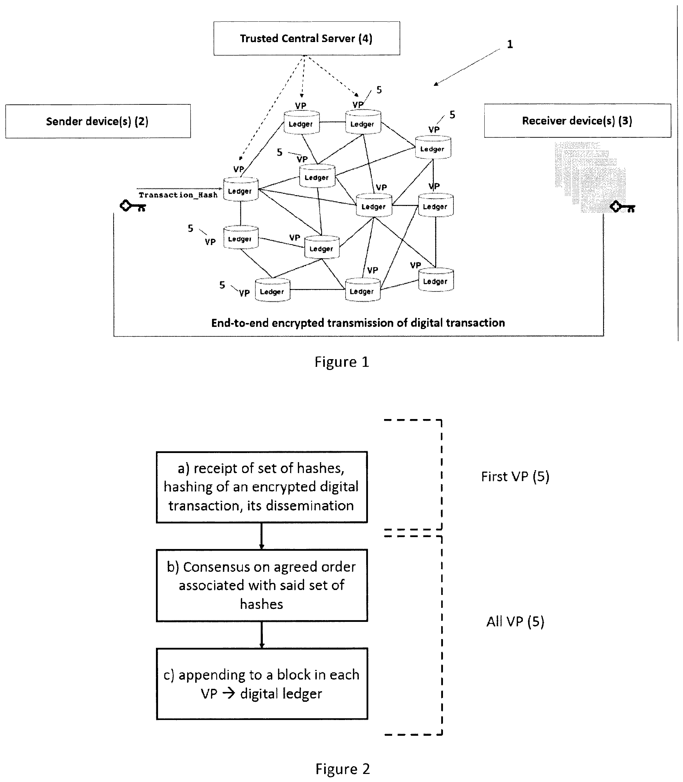

Figure 1- representation of an embodiment of the distributed system (1) of the present invention, highlighting:
   - the plurality of trusted validating peer systems (5) - indicated as VP in Figure 1-, each maintaining a ledger and being connected between each other: the minimum number of connections between trusted validating peer systems (5) is *n-1, n* being the number of trusted validating peer systems (5),
   - a trusted central server (4), which has access to the plurality of trusted validating peer systems (5) and which manages sending and corresponding receiving devices (3) configuration, such as over the air configuration or contact list management,
   - a set of sender devices (2) (virtually linked through the identifier of a user associated with such sender devices (2)), one of which sends an encrypted digital transaction to a recipient device and, in parallel, sends a set of hashes of such encrypted digital transaction to one of the trusted validating peer systems (5),
   - a recipient device, which in turn is part of a set of recipient devices (virtually linked through the identifier of a user associated with such recipient devices).
   The transaction is sent in parallel through adequate end-to-end encryption protocol(s), to a corresponding receiving device (3).
Figure 2 - representation of the main steps of the method of the present invention.

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the described method, prior to the consensus of step c), the trusted validating peer systems (5) perform consensus on the digital transaction associated with said set of hashes, such that all execute the same transaction. Hence, all execute the same transaction at all ledger instances. An example consists of deploying a transaction (step d) and subsequent query of transactions (for auditing).

In any of the described embodiments, each trusted validating peer system (5) may consist of a device or of a set of devices, in both cases operating as described.

In a preferred embodiment of the method of the present invention, said consensus between trusted validating peer systems (5) is reached via Practical Byzantine Fault Tolerance algorithm (PBFT), the number of trusted validating peer systems (5) consisting of a pre-defined number.

In a preferred embodiment of such method, a trusted central server (4) accesses more than one of the trusted validating peer systems (5), obtains at least one corresponding hash (i.e., hash path) of said block, to be audited, and thereby subsequently compares corresponding hashes, preferably further obtaining an identifier of the recipient device and an identifier of the sender device (2) associated with said hash (to be audited).

In a preferred embodiment of such method, prior to step a), the sender device (2) sends an identifier to at least one trusted central server (4) which assigns to the sender device (2) an identifier of such sender device (2) and/or an identifier of a user associated with such sender device.

In a preferred embodiment of the distributed system (1) for ensuring auditability of a digital transaction, the trusted central server (4) is configured to access more than one of the trusted validating peer systems (5), obtain at least one corresponding hash (i.e., hash path) of said block and subsequently compares such hashes, preferably further obtaining an identifier of the recipient device and an identifier of the sender device (2) associated with said hash.

Additionally, in an embodiment such distributed system (1) further comprises at least one sender device (2) and at least one recipient device, the sender device (2) being configured to:
- send an encrypted digital transaction from the sender device (2) to a recipient device and, in parallel,
- perform hashing of such encrypted digital transaction into a set of hashes and subsequently transmitting such set of hashes to a first trusted validating peer system (5) from said plurality of trusted validating peer systems (5).

As the referred sender device, the recipient device may also be virtually linked with other recipient devices by means of an identifier of a user associated with such recipient devices.

The method of the present invention falls within the scope of Blockchain technologies, yet comprising innovative features which distinguish from such technologies, thereby enhancing them, as above described. The present invention applies a Blockchain based methodology.

Further, the method of the present invention enables the analysis of data maintained in the validating peer system - for example by using an Artificial Intelligence engine - to identify usage anomalies such as (i) IP discrepancies (sender identifiers), (ii) locations / Geolocations mismatch, (iii) concurrent communication channels, or (iv) recipients' anomalies.

The present invention thus provides auditability for several applications, such as dispute resolution, legal recourse, investigations, or proactive risk management.

Further, access from the trusted central server (4) (to an Auditor) can be limited to individual users (with associated identifiers) or devices (also through associated identifiers) and/or to circumscribed transaction time periods and / or associated nonces. Furthermore, access can be graduated so as to release transaction-specific data to only if there is an established cause.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Method for ensuring auditability of a digital transaction **characterised in that** it comprises the following steps:
a) on receipt of a set of hashes corresponding to the hashing of an encrypted digital transaction sent from a sender device (2) to a recipient device in a first trusted validating peer system (5) from a plurality of trusted validating peer systems (5), dissemination of such set of hashes from said first trusted validating peer system (5) to the remaining trusted validating peer systems (5);
b) consensus by the plurality of trusted validating peer systems (5) on an agreed order associated with said set of hashes;
c) appending of said set of hashes in said agreed order to a block in each of said trusted validating peer systems (5), thereby forming a digital ledger in each of said trusted validating peer systems (5) and a corresponding state table,
said trusted validating peer systems (5) being connected between each other by a minimum number of connections per trusted validating peer system, such number being greater than 1.

2. Method according to the previous claim said set of hashes is maintained in the referred blocks of each of the trusted validating peer systems (5) through a Merkle Tree structure, each of the trusted validating peer systems (5) maintaining an internal state of such Merkle Tree.

3. Method according to any of the preceding claims wherein each hashing further comprises:
- a public key of a key pair associated with the sender device (2) and
- the digital transaction being signed with the private key of said key pair.

4. Method according to any of the preceding claims wherein said hashing consists of a Secure Hash Algorithm (SHA), preferably an agile algorithm such as Secure Hash Algorithm 3 (SHA-3).

5. Method according to any of the preceding claims wherein each hashing further comprises:
- an identifier of the sender device (2) and/or an identifier of a user associated with the sender device,
- an identifier of the recipient device and, preferably,
- a nonce associated with the encrypted digital transaction.

6. Method according to any of the preceding claims wherein said appending of the set of hashes to a block in each of said trusted validating peer systems (5) further comprises the appending of:
- an identifier of the sender device (2) and/or an identifier of a user associated with the sender device,
- an identifier of the recipient device and, preferably,
- a nonce associated with the encrypted digital transaction and/or
- the time of the digital transaction.

7. Method according to any of the preceding claims wherein said consensus between trusted validating peer systems (5) is reached via Practical Byzantine Fault Tolerance algorithm (PBFT), the number of trusted validating peer systems (5) consisting of a pre-defined number.

8. Method according to any of the preceding claims wherein said digital transaction comprises chat, voice, email, file and/or video data.

9. Method according to any of the preceding claims wherein each hashing further comprises a classification parameter, such classification parameter being associated with a security level and / or protocol of said encrypted digital transaction.

10. Method according to any of the preceding claims wherein each trusted validating peer system (5) of the plurality of trusted validating peer devices consists of an individual system having a unique identifier.

11. Method according to any of the preceding claims wherein a trusted central server (4) accesses more than one of the trusted validating peer systems (5), obtains at least one corresponding hash of said block, to be audited, and subsequently compares such hashes, preferably further obtaining an identifier of the recipient device and an identifier of the sender device (2) associated with said hash.

12. Method according to any of the preceding claims wherein, prior to step a), the sender device (2) sends an identifier to at least one trusted central server (4) which assigns to the sender device (2) an identifier of such sender device (2) and/or an identifier of a user associated with such sender device and/or, prior to the consensus of step c), trusted validating peer systems (5) perform consensus on the digital transaction associated with said set of hashes, such that all execute the same transaction.

13. A platform for ensuring auditability of a digital transaction **characterised in that** it comprises a plurality of trusted validating peer systems (5) configured to implement the method of any of the claims 1-10.

14. A distributed system (1) for ensuring auditability of a digital transaction **characterised in that** it comprises the platform of claim 13 and, preferably, a trusted central server (4) configured to implement the method of claim 11.

15. System according to the previous claim further comprising at least one sender device (2) and at least one recipient device, the sender device (2) being configured to:
- send an encrypted digital transaction from the sender device (2) to a recipient device and, in parallel,
- perform hashing of such encrypted digital transaction into a set of hashes and subsequently transmitting such set of hashes to a first trusted validating peer system (5) from said plurality of trusted validating peer systems (5).
